(19) Europäisches Patentamt
European Patent Office
Office européen des brevets

(11) EP 1 025 759 A1

(12) EUROPEAN PATENT APPLICATION

(43) Date of publication:
09.08.2000 Bulletin 2000/32

(51) Int Cl.[7]: **A01N 59/00**, A01N 37/16
// (A01N59/00, 37:16)

(21) Application number: **99300755.8**

(22) Date of filing: **02.02.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **SOLVAY (Société Anonyme)**
**1050 Bruxelles (BE)**

(72) Inventors:
- **Simms, Robert A.**
  **Warrington, Cheshire WA1 4HA (GB)**
- **McAdam, Johnathan**
  **St. Helens, Merseyside WA9 4NN (GB)**
- **French, Madeline**
  **Runcorn, Cheshire WA7 6RW (GB)**

(74) Representative: **Howard, Paul Nicholas**
**Carpmaels & Ransford**
**43 Bloomsbury Square**
**London WC1A 2RA (GB)**

# (54) Aqueous disinfectant compositions, process for preparing them and their use

(57) An aqueous disinfectant composition comprising at least one percarboxylic acid, hydrogen peroxide and at least one emollient, having a pH of from about 4.0 to 6.0.

A process for preparing this composition by mixing a first aqueous solution comprising at least one percarboxylic acid and hydrogen peroxide with a second aqueous solution comprising at least one emollient and having a pH higher than that of the first aqueous solution.

Two-pack system suitable for the preparation of the composition, the first pack comprising the first aqueous solution and the second pack comprising the second aqueous solution.

Use of the composition for disinfecting the skin of an animal or as prophylactic treatment of the skin of an animal.

EP 1 025 759 A1

## Description

This invention concerns disinfectant compositions, a process for the preparation of such compositions, a two-pack system for preparing such compositions and the use of such compositions. More particularly it concerns compositions comprising aqueous percarboxylic acid solutions containing an emollient which compositions are suitable for disinfecting the skin of an animal without causing irritation either to the animal or the person applying the solution.

Modern methods of farming often require the processing, and hence collection together of large numbers of a single species of animal at one time. As is well known such de facto monocultures are highly susceptible to the spread of disease, via microbial agents, throughout the particular population especially where the animals are in close contact with one another or where a certain item of farm equipment can act as a vector for the disease. It is therefore highly desirable to provide a method of controlling the levels of such microbial agents, whilst at the same time trying to minimise harm, not only to the animals concerned but also to the environment.

In one branch of farming, the dairy industry, an area of particular concern is the prevention of mastitis, or inflammation of the mammary gland, as this can lead to a lowering of milk production and quality, as well as high veterinary costs. Although not exclusively caused by microbial agents, bacteria (such as Escherichia coli, Staphylococcus aureus, Streptococcus agalactiae, Pasteurella species, Pseudomonas species), fungi (such as Aspergillus species, Candida species), and algae (such as Prototheca spp) are often the main factor behind it. Although the risk of passing on infection can be lowered by proper cleaning and sterilisation of the milking equipment, it is also advantageous to prevent the build up of mastitiscausing microbes on the cow's udder by application of a disinfectant. Disinfection or prophylactic treatment, can be carried out using any one of, or a combination of methods such as for example spraying the udder, dipping it in a solution of the disinfectant, or by massaging the disinfectant into the infected area. It will be recognised that a further desideratum of such disinfectants is that although they will be active anti-microbial agents, they should not be harmful to the person applying them. Furthermore, they should not alter the quality of the milk produced.

One widely used disinfectant is iodophor, which term encompasses products where a surface active agent is employed as a carrier or solubilising agent for iodine. Although such materials are effective disinfectants they have the drawback that the iodine can get into the cow's milk and render it unsuitable for consumption. Another disinfecting agent is chlorhexidine. Again this is an effective disinfectant, but containing as it does, a chlorinated benzene ring, its use is likely to come under increasing pressure due to environmental considerations regarding its breakdown products and biodegradability.

A further class of compounds which can be used as disinfectants is percarboxylic acids. These can be applied either as non-aqueous solutions, or aqueous solutions. The use of non-aqueous solutions is disadvantageous on several grounds: because of the expense of the solvent, because of any cost of disposal of the solvent once used, and because of health implications of the udder being in contact with quantities of the solvent over prolonged periods.

Although it is convenient to supply percarboxylic acids as aqueous solutions, this also introduces its own problem. This is illustrated below using peracetic acid as an example, although the concept is true for the other organic percarboxylic acids. In aqueous solution peracetic acid will hydrolyse until an equilibrium is reached between constituents of the solution in accordance with the following formula:

$$\text{Hydrogen Peroxide} + \text{Acetic Acid} \rightleftarrows \text{Peracetic Acid} + \text{Water}$$

For which:

$$K = \frac{[\text{Peracetic Acid}][\text{Water}]}{[\text{Hydrogen Peroxide}]\ [\text{Acetic Acid}]}$$

where K is known as the equilibrium constant.

As this equilibration process will normally only require a few days to take place, most commercial solutions of peracetic acid will contain substantial quantities of acetic acid, and therefore will be of correspondingly low pH. Such acidity can lead to irritancy on sensitive areas of skin, especially with prolonged or repeated use. It would therefore be advantageous to provide a disinfectant solution which overcomes or ameliorates this problem.

it is a first object of certain aspects of the present invention to provide a disinfectant solution which can be applied directly on to mammalian skin without causing irritation.

According to the present invention, there is provided an aqueous disinfectant composition comprising at least one percarboxylic acid, hydrogen peroxide, and at least one emollient characterised in that the disinfectant composition comprises sufficient alkali to provide a pH of from about 4.0 to about 6.0.

One of the essential characteristics of the composition of the present invention resides in its pH. It has indeed

been found that such pH values do not cause irritation when directly applied to mammalian skin and do not destabilise the composition adversely when diluted for disinfecting the skin of an animal.

The composition contains, where needed when the natural pH is not adequate, sufficient base that the pH of the composition is from about 4.0 to about 6.0. The pH is preferably from about 4.5 to 5.5. Suitable bases for controlling the pH are sodium hydroxide, potassium hydroxide, ammonium hydroxide, sodium carbonate, potassium carbonate, ammonium carbonate, sodium bicarbonate, potassium bicarbonate, ammonium bicarbonate, etc... Sodium hydroxide is a particularly preferred base.

The percarboxylic acid can be present in the composition of the present invention in an amount of from about 100 ppm to about 10,000 ppm. It is preferably present in an amount of from about 300 ppm to about 3,000 ppm. It is especially preferred that the percarboxylic acid is present in an amount of from 450 ppm to 1,500 ppm.

The percarboxylic acid can be any percarboxylic acid of sufficient solubility. Examples of such peracids include low molecular weight aliphatic peroxyacids, containing up to 6 carbon atoms, the alkyl part of the chain being optionally substituted. Especially preferred examples comprise peracetic acid and perpropionic acid. Other examples include performic acid, perbutyric acid, dipersuccinic acid, diperglutaric acid, and diperadipic acid. The alkyl part of the chain may be optionally substituted with one or more substituents selected from halo-, nitro-, amido-, hydroxy-, carboxy-, sulpho-, or phosphono- groups. Contemplated from this group are monochloroperacetic acid, dichloroperacetic acid, trichloroperacetic acid, and trifluoroperacetic acid. Further examples include the monoperacids of dibasic carboxylic acids such as monopersuccinic acid, monoperglutaric acid, monoperadipic acid, and also percitric acid and pertartaric acid. Additionally the substituent may be further derivatised to give groups such as esters or ethers. Examples of these are monoester peracids of formula:

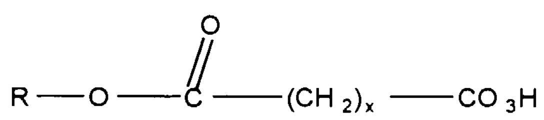

where R represents an alkyl group having from 1 to 4 carbons and x is from 1 to 4.

A mixture of peracids, particularly a mixture of mono- and di-, persuccinic, perglutaric and peradipic acids, may be employed if desired. Especially suitable are the monoester peracids given above, and more especially, mixtures of these comprising x = 2, 3, and 4. The compositions may alternatively or additionally include aromatic and substituted aromatic peroxyacids, such as monoperphthalic acid or salts thereof, sulphoperbenzoic acid or salts thereof chloroperbenzoic acids, and tolueneperbenzoic acids. It is particularly preferred that the percarboxylic acid is peracetic acid.

The hydrogen peroxide content of the composition of the present invention can be from about 200 ppm to about 60,000 ppm. Generally it is present in an amount of from 500 ppm to about 18,000 ppm and preferably from about 1000 ppm to about 10,000 ppm.

The hydrogen peroxide content can for instance be from about 0.04%w/w to about 1.5%w/w.

The composition may also contain an emollient in an amount up to about 25%w/w. The emollient is preferably present in an amount of from about 2%w/w to about 15%w/w. A particularly preferred range is an amount of from about 3%w/w to about 10%w/w.

Suitable emollients include polyols, polyalkylethers, glycoside esters. Examples of polyols are glycerol, propylene glycol and sorbitol. Examples of polyalkylethers are polyethyleneoxides, polypropyleneoxides, poly(ethylenecopropylene)oxides, alkylethyleneoxides. Examples of glycoside esters are octyl glycoside and decyl glycoside. An especially preferred emollient is sorbitol.

The composition may also additionally contain one or more hydrogen peroxide and/or percarboxylic acid stabilisers. Each relevant stabiliser can be present in an amount up to about 50,000 ppm. Suitable stabilisers include dipicolinic acid and phosphonic acids and salts thereof, for example the products sold by Monsanto under the trade mark "DEQUEST" such as 1,1,1-hydroxyethylidenediphosphonate, diethylenetriaminepentamethylene phosphonate and ethylenediaminetetramethylene phosphonate and those stabilisers claimed in European patent application 0426949, especially cyclohexane-1,2-diaminotetramethylenephosphonic acid and salts thereof (CDTMP).

The composition may also additionally contain perfumes, surfactants, thickening agents or indicators, such as, for example, methyl red, to demonstrate dilution or mixing with an other solution.

According to further aspects of the invention there is provided a process for the preparation of the above-described aqueous disinfectant compositions by mixing two aqueous solutions, the first aqueous solution comprising at least one percarboxylic acid and the second aqueous solution comprising at least one emollient and having a pH higher than that of the first solution.

The first solution can contain the percarboxylic acid in quantities of up to about 20%w/w but is preferably present to about 15%w/w. It is particularly preferred that the percarboxylic acid is present in an amount of from about

0.5%w/w to about 7%w/w.

It should be understood that the first solution is usually an equilibrium mixture of the relevant reactants and reaction products, as described earlier.

The second aqueous solution presents a pH which is adequate to give the desired pH upon mixing with the first aqueous solution in the appropriate ratio. The second aqueous solution has advantageously a pH of at least 9.0, in particular of at least 10.0. The pH of the second aqueous solution is usually at most 12.0, in particular at most 11.0. When the natural pH of the second aqueous solution is not adequate, then the second solution preferably contains a pH adjusting compound. This pH adjusting compound can be chosen from all the possible sources of hydroxide anions which are inert with regard to the other components of the composition. Suitable sources of hydroxide are the bases described above as being suitable for the composition. Sodium hydroxide is particularly preferred as base.

The second aqueous solution additionally comprises one or more emollients. These can be present in an amount of from about 2%w/w to about 18%w/w and preferably present in an amount of from 3%w/w to 11% w/w. The amount of emollient present is to be determined by the amount required to give the desired pH upon mixing the first and second solutions. Suitable emollients are those given above for the compositions.

The second aqueous solution may additionally comprise hydrogen peroxide and/or percarboxylic acid stabiliser in sufficient quantities such that upon mixing the first aqueous solution with the second aqueous solution, each relevant stabiliser is present in an amount of from about 20 ppm to about 10,000 ppm.

One or both of the aqueous solutions may additionally contain an indicator which undergoes a colour change when the first aqueous solution and the second aqueous solution have been mixed together in the correct proportions.

The process of the invention can be carried out by mixing the first aqueous solution with the second aqueous solution in a volume ratio of at least 1 : 5 and usually not more than 1 : 50, preferably from 1 : 8 to 1 : 30 taking into account the desired quantities of each of the components in the final mixture and their concentration in each of the solutions.

According to yet further aspects of the present invention, there is also provided a two-pack system suitable for the preparation of the above-described disinfectant compositions, the first pack comprising a first aqueous solution of at least one percarboxylic acid and hydrogen peroxide (corresponding to the first aqueous solution described before) and the second pack comprising a second aqueous solution comprising at least one emollient and having a pH higher than that of the first aqueous solution (corresponding to the second aqueous solution described before).

The two-pack system of the present invention ensures that the relatively high pH (from 4 to 6) necessary to avoid skin irritation does not unduly affect the stability of the product, the pH adjusting agent being contained in a pack separate to the percarboxylic acid and containing the emollient. Indeed, on mixing of the two packs, an effective concentration of the percarboxylic acid is made available containing sufficient emollient to provide a skin-conditioning effect, and at a suitable pH to minimise the loss of percarboxylic acid over a period of at least 12 to 16 hours, so that after this time, an effective concentration still remains. This period corresponds approximately to the period during which for instance the two daily milkings (one in the morning and one in the evening) are carried out. This means that the composition needs only to be prepared once a day. It is therefore recommended to use the process of the invention just before using the composition in any disinfectant application.

The composition and the two-pack system according to the invention can advantageously be used for disinfecting the skin of an animal or as prophylactic treatment of the skin of an animal, especially in the diary industry. They are particularly performing when used for preventing mastitis. The present invention therefore also concerns the use of the above-described disinfectant compositions for disinfecting the skin of an animal or in the prophylactic treatment of the skin of an animal.

## Claims

1. An aqueous disinfectant composition comprising at least one percarboxylic acid, hydrogen peroxide and at least one emollient, having a pH of from about 4.0 to 6.0.

2. Composition according to claim 1, having a pH of from 4.5 to 5.5.

3. Composition according to claim 1 or 2, in which the percarboxylic acid is chosen from aliphatic percarboxylic acids containing up to 6 carbon atoms, the alkyl part of the chain being optionally substituted, and in which the percarboxylic acid content is from about 100 ppm to about 10,000 ppm.

4. Composition according to any of the preceding claims, having a hydrogen peroxide content of from about 0.04%w/w to 1.5%w/w.

**5.** Composition according to any of the preceding claims, in which the emollient is chosen from polyols, polyalkylethers and glycoside esters, and in which the emollient content is up to about 25%w/w.

**6.** A process for preparing an aqueous disinfectant composition comprising at least one percarboxylic acid, hydrogen peroxide and at least one emollient, having a pH of from about 4.0 to 6.0, according to which a first aqueous solution comprising at least one percarboxylic acid and hydrogen peroxide is mixed with a second aqueous solution comprising at least one emollient and having a pH higher than that of the first aqueous solution.

**7.** Process according to claim 6, in which the first aqueous solution has a percarboxylic acid content of up to about 20%w/w.

**8.** Process according to claim 6 or 7, in which the second aqueous solution has an emollient content of from about 2%w/w to about 18%w/w, preferably 3-11%w/w, and a pH of from about 9 to about 12, preferably 10-11% w/w.

**9.** Process according to any one of claims 6 to 8, carried out by mixing the first aqueous solution with the second aqueous solution in a volume ratio of at least 1 : 5 and not more than 1 : 50.

**10.** A two-pack system suitable for the preparation of an aqueous disinfectant composition comprising at least one percarboxylic acid, hydrogen peroxide and at least one emollient, having a pH of from about 4.0 to 6.0, the first pack comprising a first aqueous solution of at least one percarboxylic acid and hydrogen peroxide and the second pack comprising a second aqueous solution comprising at least one emollient and having a pH higher than that of the first aqueous solution.

**11.** Use of an aqueous disinfectant composition comprising at least one percarboxylic acid, hydrogen peroxide and at least one emollient, having a pH of from about 4.0 to 6.0 for disinfecting the skin of an animal or in the prophylactic treatment of the skin of an animal.

European Patent Office

**EUROPEAN SEARCH REPORT**

Application Number
EP 99 30 0755

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.6) |
|---|---|---|---|
| P,X | WO 99 15014 A (SIMMS ROBERT ASHLEY) 1 April 1999 * the whole document * | 1-11 | A01N59/00 A01N37/16 //(A01N59/00, 37:16) |
| X | US 5 616 335 A (LEDON HENRY ET AL) 1 April 1997 see col. 4, line 36 - col. 5, line 19; col. 6, line 45 - col. 7, line 6; examples 1 and 2. | 1-5 | |
| A | WO 88 08667 A (MINNTECH CORP) 17 November 1988 * table 1 * | 1-11 | |
| A | WO 95 34537 A (SOLVAY INTEROX LTD ;CARR GRAHAM (GB); JAMES ALUN PRYCE (GB)) 21 December 1995 * page 9, line 4-19 * | 1-11 | |
| A | CHEMICAL ABSTRACTS, vol. 104, no. 1, 6 January 1986 Columbus, Ohio, US; abstract no. 2072q, E. FUSTES ET AL.: "Teat profylactic disinfection against intramammary infections. I. Skin effect of different disinfectants proposed for mammary use." XP002086298 * abstract * & REV. SALUD. ANIM., vol. 7, no. 2, 1985, pages 193-200, | 1-5 | TECHNICAL FIELDS SEARCHED (Int.Cl.6) A01N |

The present search report has been drawn up for all claims

| Place of search | Date of completion of the search | Examiner |
|---|---|---|
| MUNICH | 29 June 1999 | Klaver, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 30 0755

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-1999

| Patent document cited in search report | Publication date | Patent family member(s) | Publication date |
|---|---|---|---|
| WO 9915014 A | 01-04-1999 | NONE | |
| US 5616335 A | 01-04-1997 | FR 2704726 A | 10-11-1994 |
| | | AT 176381 T | 15-02-1999 |
| | | CA 2139569 A | 10-11-1994 |
| | | DE 69416373 D | 18-03-1999 |
| | | EP 0649274 A | 26-04-1995 |
| | | ES 2126757 T | 01-04-1999 |
| | | WO 9424863 A | 10-11-1994 |
| | | JP 8502518 T | 19-03-1996 |
| | | NO 945036 A | 04-01-1995 |
| WO 8808667 A | 17-11-1988 | AT 102436 T | 15-03-1994 |
| | | AU 619449 B | 30-01-1992 |
| | | AU 7870687 A | 06-12-1988 |
| | | DE 3789315 D | 14-04-1994 |
| | | DE 3789315 T | 30-06-1994 |
| | | EP 0357598 A | 14-03-1990 |
| | | JP 6067810 B | 31-08-1994 |
| | | JP 2502532 T | 16-08-1990 |
| | | US 5656302 A | 12-08-1997 |
| WO 9534537 A | 21-12-1995 | AU 693563 B | 02-07-1998 |
| | | AU 2679495 A | 05-01-1996 |
| | | DE 69508939 D | 12-05-1999 |
| | | EP 0765309 A | 02-04-1997 |
| | | JP 10501805 T | 17-02-1998 |

EPO FORM P0459

For more details about this annex : see Official Journal of the European Patent Office, No. 12/82